# EUROPEAN PATENT APPLICATION

(11) **EP 1 881 622 A2**
(43) Date of publication of application: **23.01.2008**
(21) Application number: 07111155.3
(22) Date of filing: 27.06.2007
(51) Int. Cl.: H04B 7/26

(54) **Ad-hoc communication method and communication system between terminals**

(30) Priority: 18.07.2006 JP 2006195504
(71) Applicant: FUJITSU LIMITED, Kawasaki-shi, Kanagawa 211-8588 (JP)
(72) Inventor: Machida, Mamoru c/o FUJITSU LIMITED, Kawasaki-shi Kanagawa 211-8588 (JP)
(74) Representative: Stebbing, Timothy Charles

(57) **Abstract**

An ad-hoc communication system is proposed, which performs ad-hoc communication between terminals, and combines the advantages of the FDMA modulation method and TDMA method with the advantages of the CSMA method. Each terminal (MS) of the ad-hoc communication system includes a signal generation portion (2, 3), which provides a plurality of subchannels in the frequency axis direction in a plurality of frequency bands orthogonally frequency-divided, and generates a format signal with transmission data allocated to the subchannels, and a path detection portion (36), which detects a preamble signal at the beginning of the format signal, and detects the presence or absence of a carrier, and when the carrier of another terminal (MS) is not detected by the path detection portion (36), performs transmission of the generated format signal, and when the preamble signal is detected by another terminal, establishes synchronization, and receives the transmission data of the transmitted format signal.

## Description

This application is based upon and claims the benefit of priority from the prior Japanese Patent Application No. 2006-195504, filed on July 18, 2006.

This invention relates to an ad-hoc communication system and method which performs communication between terminals, without requiring base stations or relay stations, and to a terminal for use therein.

Communication between terminals employs a communication mode such as that of transceivers, using the 802.11 series standards as represented by wireless LANs or similar, employing FDMA (Frequency Division Multiple Access) communication, the CSMA (Carrier Sense Multiple Access) method, or similar.

FDMA communication is a method in which usage frequencies are allocated in terminal units; the CSMA method is a method in which a small number of frequencies are shared by a plurality of terminals.

In the case of FDMA communication, usage frequencies are allocated in terminal units (terminal by terminal), so that there is the problem that frequency utilization efficiency is extremely poor. Further, when a new system is proposed, frequency allocation is difficult.

On the other hand, when in the CSMA method a large number of terminals attempt to transmit data in asynchronous communication, it is unclear when transmission by each terminal is possible. Further, the standard assumes a wireless LAN or other fixed equipment, and so is not easily applied to mobile terminals.

The inventor of this application has, in a prior application (Japanese Patent Application No. 2006-121941), proposed an OFDMA communication device in which transmission data is multiplexed with a prescribed preamble signal and broadcast signal, and the entirety of these is OFDM (Orthogonal Frequency Division Multiplexing) modulated and transmitted to a plurality of reception devices (mobile stations).

OFDMA modulation is a modulation method based on IEEE 802.16-2004 standards for WiMAX (Worldwide Interoperability for Microwave Access), and employs a method of dividing frequencies used for data by time. On the other hand, in the IEEE 802.16e standard relating to mobile broadband systems, an OFDMA (Orthogonal Frequency Division Multiple Access) method is employed, and in addition to the time division of the OFDM method, data is divided among subcarriers as well.

As a system employing the OFDM method, for example, a mobile communication system has been disclosed in National Translation for PCT Application No. 2006-507753 in which, by providing a synchronization preamble and cell search preamble within the downlink subframe, time and frequency synchronization and cell searching can be performed efficiently.

In light of the above, it is desirable to provide an ad-hoc communication system between terminals, which combines the advantages of the above prior application or the advantages of the OFDMA modulation method described in the above-mentioned prior art with the advantages of the TDMA method, and the advantages of the CSMA method.

That is, the robustness with respect to mobility which is a feature of the OFDMA modulation method is exploited, and the reliability of communication for asynchronous communication by time division which is a feature of the TDMA method is increased. Further, by performing carrier sensing in order to avoid collision of transmitting terminals, ad-hoc communication between terminals is made possible.

A first aspect of the invention provides a communication system which performs ad-hoc communication between terminals, having, in each terminal, a signal generation portion, which provides a plurality of subchannels in the frequency axis direction in a plurality of frequency bands orthogonally frequency-divided, and generates a format signal with transmission data allocated to the subchannels, and a path detection portion, which detects a preamble signal at the beginning of the format signal, and detects the presence or absence of a carrier, and is characterized in that, when the carrier of another terminal is not detected by the path detection portion, transmission of the generated format signal is performed, and when the preamble signal is detected by another terminal, synchronization is established, and the transmission data of the transmitted format signal is received.

By means of these characteristics, characteristics related to mobility based on the OFDMA modulation method can be improved.

In an embodiment, the communication system further has reception portion for a positioning system such as the GPS, which generates an internal clock signal based on a clock signal from the positioning system, whereby transmission of the format signal is performed in a time slot unit synchronized with the internal clock signal.

By using TDMA as the access method, communication reliability in synchronous communication is improved.

In the above embodiment, preferably, the timing for transmission of the format signal is set to an integral multiple of the time slot unit, and in that the timing for the transmission is set in multiples of the time slot unit, in an order of priority for each terminal.

By using the priority order, the reliability of information transmission can be improved.

In the above system, the priority of timing for detection of the preamble signal may be set, for each terminal, within the time slot unit.

By this means, through transmission collision avoidance and review of the period enabling transmission, the efficiency of frequency utilization can be improved.

In addition, a plurality of terminals may be allocated to a group unit (group), with a plurality of subchannels in the frequency axis direction as a group, and the priority of timing for detection of the preamble signal is set, for the plurality of allocated terminals of each group, within the time slot unit for each subchannel.

By means of this characteristic, the characteristics of OFDMA can be exploited to divide transmission regions by subchannel, so that transmission collision avoidance is achieved, and terminal transmission efficiency can be simultaneously improved.

For example, two subchannels, adjacent in the frequency axis direction, form a group, and the subchannel used by an allocated terminal is switched at each time slot.

In this way, by changing the manner of division of subchannel regions, a transmission terminal can receive transmission data from a transmission terminal of another region in the same time slot.

Other aspects of the invention provide a terminal for use in the above system, a computer program for implementing the terminal, and a communication method using the above system.

Reference is made, by way of example only, to the accompanying drawings in which:
Fig. 1A is a conceptual diagram of a communication system to which the invention is applied, and is a figure showing a system in which terminals MS perform asynchronous communication.
Fig. 1B is a conceptual diagram of a communication system to which the invention is applied, and is a figure showing a system in which terminals MS, clock-synchronized with the GPS, communicate without mediation of base stations or similar.
Fig. 2 is a figure showing the common terminal configuration of terminals MS in a communication system in which the terminals MS shown in Fig. 1A communicate asynchronously.
Fig. 3 is the signal format used in the communication system of the terminal configuration of Fig. 2.
Fig. 4 is the operation flow corresponding to the embodiment of Fig. 2 and Fig. 3.
Fig. 5 shows the common terminal configuration of terminals MS in a communication system in which terminals MS shown in Fig. 1B are synchronized with the clock of a GPS signal.
Fig. 6 is the signal format used in the communication system of the terminal configuration of Fig. 5.
Fig. 7 is the operation flow corresponding to the embodiment of Fig. 5.
Fig. 8 is an example of a signal format in the third embodiment of the invention.
Fig. 9 is a (first) operation flow corresponding to the embodiment of Fig. 8.
Fig. 10 is a (second) operation flow corresponding to the embodiment of Fig. 8.
Fig. 11 is a figure showing an example of a signal format of the fourth embodiment, in which, compared with the second embodiment, priority control is performed enabling transmission within time slots.
Fig. 12 is a time chart figure explaining transmission collision avoidance in the fourth embodiment.
Fig. 13 is a figure showing operation flow based on transmission rights.
Fig. 14 is a figure showing an example of a signal format explaining the fifth embodiment.
Fig. 15 is a figure showing an example of a signal format explaining the sixth embodiment.

Embodiments of the invention are explained below, referring to the drawings. The embodiments are provided to facilitate understanding of the invention, and the technical scope of the invention is not limited to these embodiments.

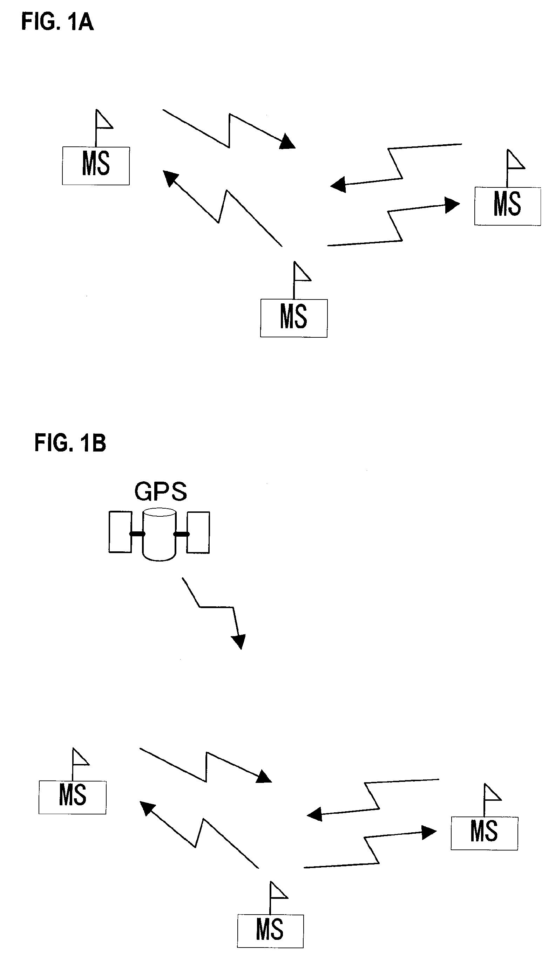

Fig. 1A and Fig. 1B are conceptual diagrams of a communication system to which the invention is applied. In the system shown in Fig. 1A, asynchronous communication by each mobile terminal (hereafter simply called "terminal") MS is shown. On the other hand, in the system shown in Fig. 1B, communication is shown by each terminal MS, clock-synchronized with the GPS (Global Positioning System) as an example of a surface-based or satellite-based positioning means (the term "GPS" is used henceforth to include any such system), without mediation of a base station or relay station.

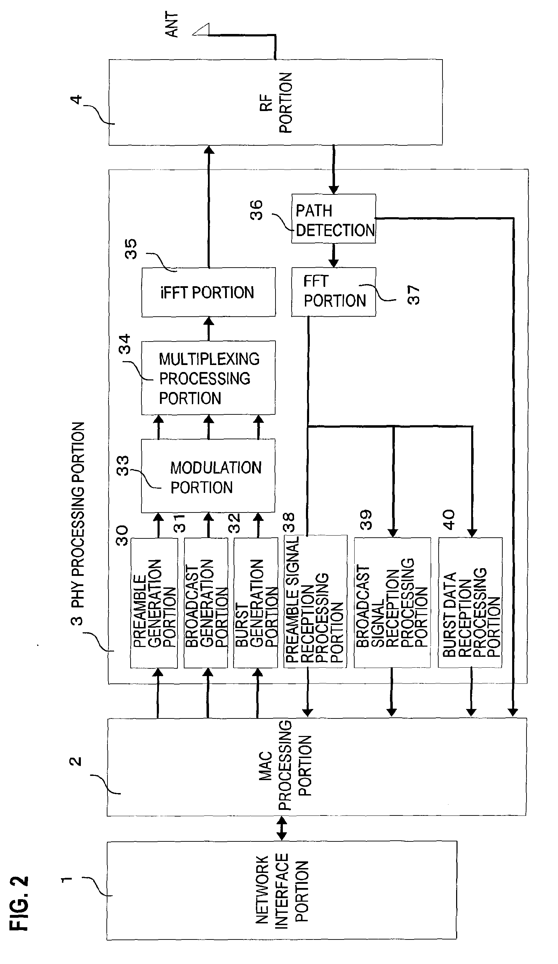

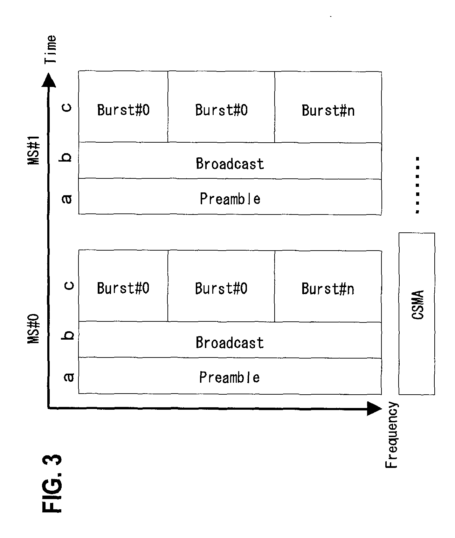

Fig. 2 shows the terminal configuration common to terminals MS in a communication system in which each terminal MS shown in Fig. 1A performs asynchronous communication. Fig. 3 shows the signal format used in the communication system with the terminal configuration of Fig. 2.

The signal format shown in Fig. 3 is the result of addition of a CSMA function to a WiMAX standard downlink circuit. A plurality of subchannels are provided in the frequency axis direction, and in the time axis direction a preamble signal a, broadcast signal b, and burst data c are provided. The burst data c is frequency-divided and allocated to a plurality of subchannels. The example of Fig. 3 is an example in which the two terminals #0 and #1 perform time-division communication; carrier sensing is performed to confirm there is no transmission from the other terminal before performing transmission.

Returning to Fig. 2, the terminal configuration comprises a network interface portion 1; media access control (MAC) processing portion 2, which performs encoding, error correction, transmission region specification, and other processing of transmission data; a physical layer (PHY) processing portion 3; a wireless frequency transmission/reception (RF) portion 4; and a GPS reception portion 5.

The network interface portion 1 of the terminal configuration has external interface functions and transmission/reception functions with the MAC processing portion 2. The MAC processing portion 2 has resource management and MAC layer functions in WiMAX systems.

The PHY processing portion 3, as the transmission function portion, comprises a preamble signal generation portion 30 which generates a preamble pattern; a broadcast signal generation portion 31; a burst data generation portion 32; a modulation processing portion 33; a multiplex processing portion (MUX) 34; and an inverse fast Fourier transform portion (IFFT) 35.

In the preamble signal generation portion 30, generation of the preamble symbols specified by the MAC processing portion 2 is performed. The broadcast signal generation portion 31 processes transmission data from the MAC processing portion 2 to perform generation and PHY layer processing of prescribed broadband data according to instructions from the MAC processing portion 2. The burst data generation portion 32 performs PHY layer processing of transmission data according to instructions from the MAC processing portion 2.

The modulation processing portion 33 performs QPSK, BPSK, multivalue modulation, and other modulation of signals from the different generation portions. The multiplexing processing portion 34 performs multiplexing of signals from the different generation portions, according to usage region (multiplexing format) instructions from the MAC processing portion 2.

The inverse fast Fourier transform portion (IFFT) 35 performs fast Fourier transform and other processing according to parameters specified by the MAC processing portion 2. The fast Fourier transform output is then frequency-converted at wireless frequencies by the RF portion 4, and is transmitted from the antenna ANT.

On the other hand, the PHY processing portion 3 comprises, as reception functions, a path detection portion 36, fast Fourier transform (FFT) portion 37, preamble signal reception processing portion 38, broadcast signal reception processing portion 39, and burst data reception processing portion 40.

The path detection portion 36 provides a portion of demodulation functions, and has functions for detecting reception paths exceeding a certain threshold and transmitting to the FFT portion 37, and a function for notifying the MAC processing portion 2 of the path detection result. When the path detection portion 36 detects a reception path which exceeds the threshold, the state is a state in which there is transmission from another terminal, and so the MAC processing portion 2 executes control such that no transmission from the terminal is performed.

The FFT portion 37 performs fast Fourier transform and other processing. The preamble signal reception processing portion 38 has functions for detection of preamble signals transmitted by a transmission terminal and for synchronization, and has a function for notifying the broadcast signal reception processing portion 39 and MAC processing portion 2 of the timing.

The broadcast signal reception processing portion 39 has functions for reception processing of internal information in WiMAX, and for notification of the MAC processing portion 2.

The burst data reception processing portion 40 receives notification, via the MAC processing portion 2, of the contents of broadcast signals, and performs WiMAX reception processing for the notified region.

The RF portion 4 has transmission/reception functions for RF modulation of baseband signals of the PHY processing portion 3, and for demodulation from RF to baseband.

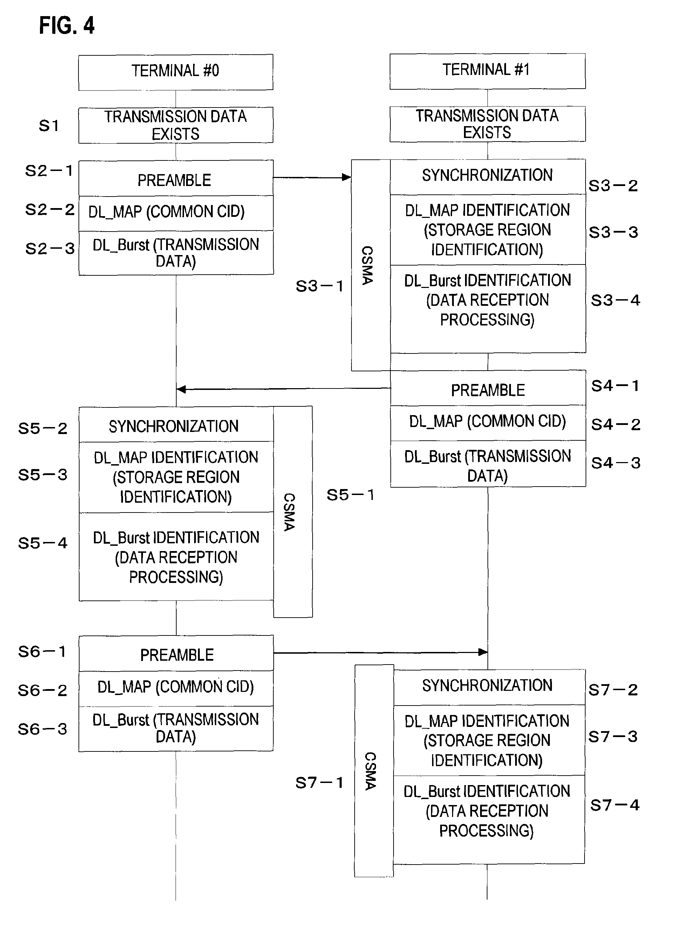

Fig. 4 shows the operation flow corresponding to the embodiment of Fig. 2 and Fig. 3.

This is an example of ad-hoc communication between two terminals MS #0 and #1. When there is data for transmission by both terminals MS #0 and #1, it is assumed that terminal MS #0 first performs data transmission.

Terminal MS #0 transmits the preamble signal (step S2-1), transmits a common connection ID (step S2-2), and then transmits burst data transmission data on a plurality of subchannels (step S2-3).

On the other hand, terminal MS #1 performs carrier detection (step S3-1), and when a carrier is detected, transmission is not performed from terminal MS #1. At this time, when the preamble signal is received from terminal MS #0, timing synchronization with terminal MS #0 is performed (step S3-2).

When synchronization is secured, the data subchannel storage region (subchannel) is identified based on the common connection ID (step S3-3). Then, burst data is received from the identified storage region (step S3-4).

When carrier detection (step S3-1) ceases, a preamble signal is similarly transmitted from terminal MS #1 (step S4-1), a common connection ID is transmitted (step S4-2), and then burst data is transmitted over a plurality of subchannels (step S4-3).

On the other hand, terminal MS #0 similarly performs carrier detection (step S5-1), and when a carrier is detected, no transmission is performed from terminal MS #0. At this time, the preamble signal is received from terminal MS #1, and timing synchronization with terminal MS #1 is performed (step S5-2).

When synchronization is secured, the data subchannel storage region is identified based on the common connection ID (step S5-3). Then, burst data is received (step S5-4).

By repeating the above processing, data communication can be performed asynchronously between the terminals MS #0 and #1.

In this embodiment, by basing communication on the OFDM modulation method, characteristics related to mobility can be improved.

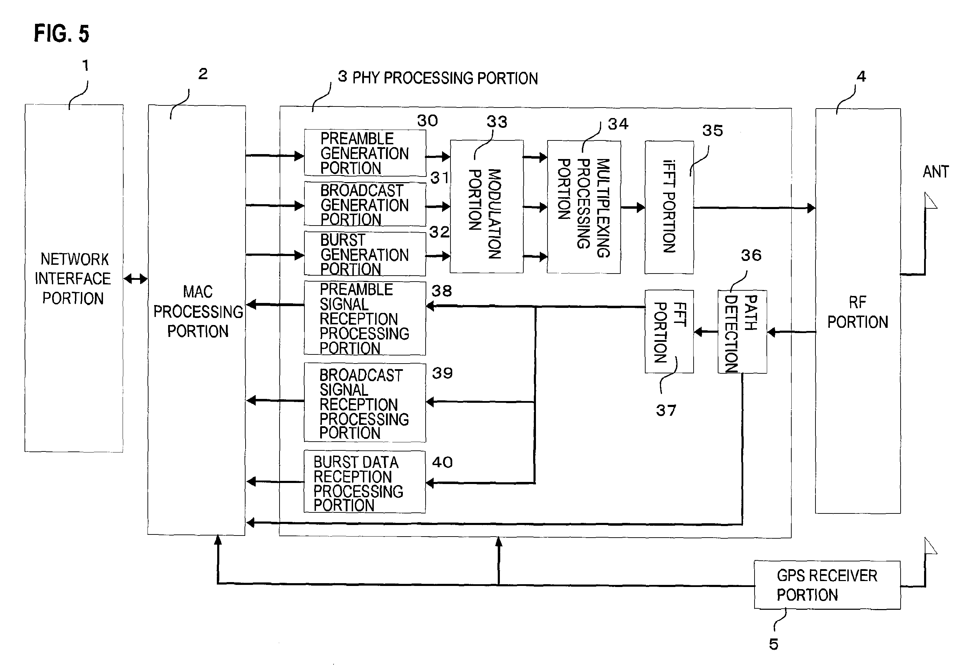

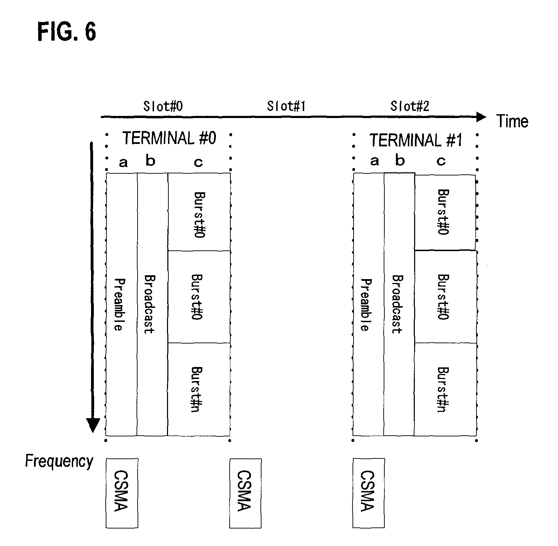

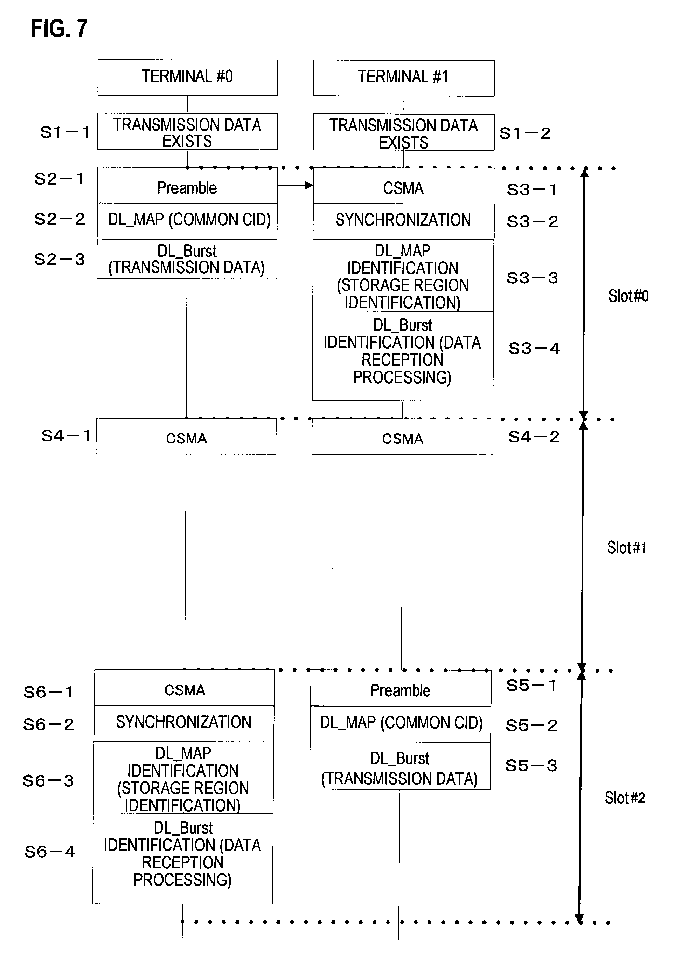

Fig. 5 shows the common terminal configuration of each of the terminals MS in a communication system in which each of the terminals MS shown in Fig. 1B is synchronized with a GPS clock. Fig. 6 is a signal format applied to a communication system in which communication is performed between terminals conforming to the terminal configuration of Fig. 5. And, Fig. 7 shows the flow of operation corresponding to the embodiment of Fig. 5.

The embodiment of a terminal MS shown in Fig. 5 has further added a GPS reception portion 5, but otherwise is configured similarly to the configuration shown in Fig. 2. An internal clock is generated based on the GPS clock received by the GPS reception portion 5, and the MAC processing portion 2 and PHY processing portion 3 operate in synchronization with this internal clock.

Fig. 6 shows the signal format in the second embodiment, with the WiMAX standard downlink circuit unmodified.

Whereas in the first embodiment previously explained, path detection (carrier sensing) is performed constantly during reception, in this second embodiment, path detection (carrier sensing) is performed only at the timing for reception of a preamble signal (steps S3-1, S6-1).

In other words, as shown in the operation flow of Fig. 7, the terminal MS is configured such that when there is transmission data, if the result of path detection (steps S4-1, 4-2) indicates that the time slot is unused, transmission is performed in the next time slot (step S6-1). In this way, there is no need for time slot synchronization, and so the internal clock is generated based on the received clock from the GPS.

Whereas if the time slot space is freely usable then preamble detection must always be performed, as shown in the operation flow of Fig. 4 (steps S3-1, 5-1, 7-1), in this second embodiment, it is sufficient to perform path detection (carrier sensing) only with the timing for receiving the preamble signal.

In this second embodiment, communication reliability in synchronous communication can be improved.

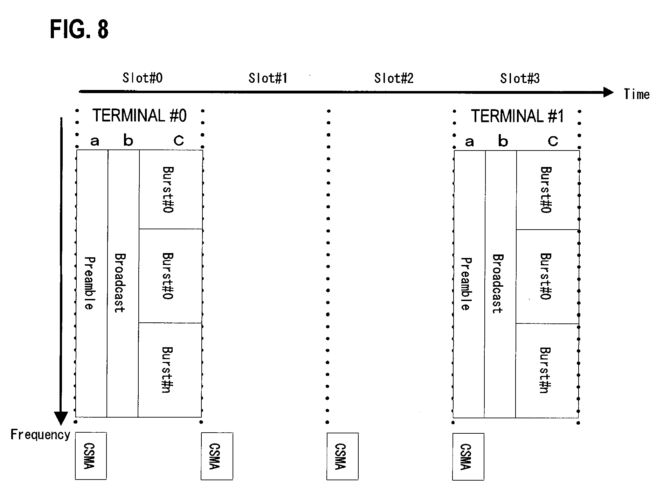

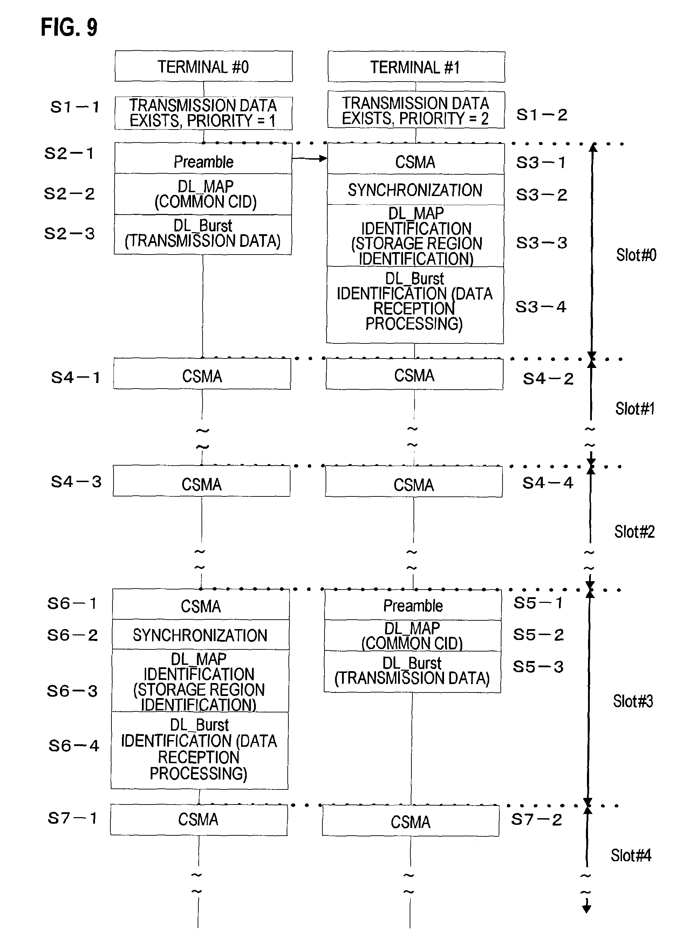

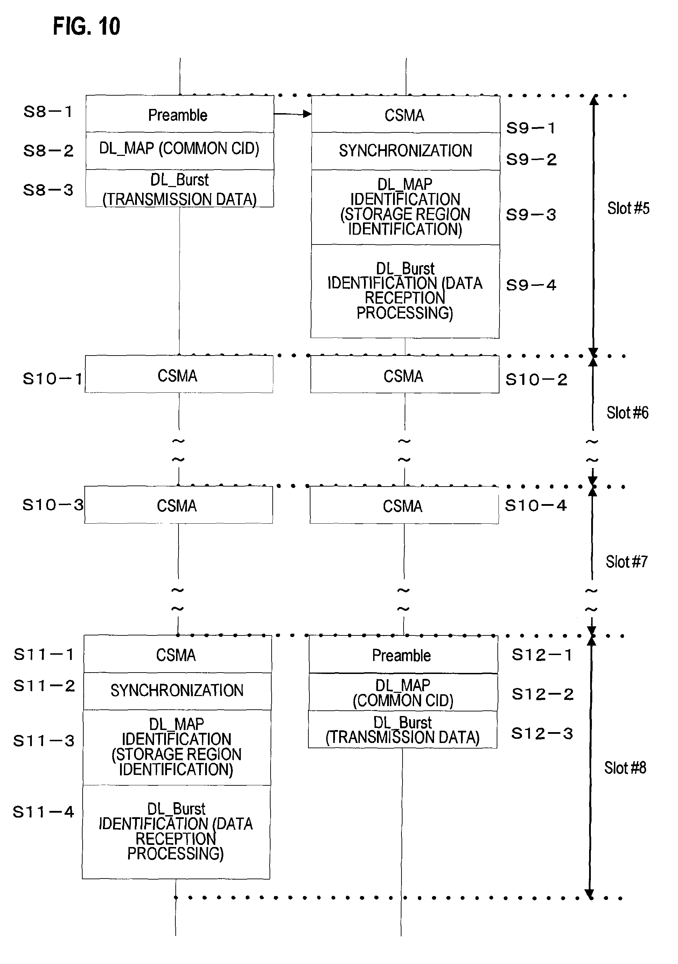

Fig. 8 is an example of the signal format of a third embodiment of the invention. Fig. 9 and Fig. 10 show the (first and second) operation flow corresponding to the embodiment of Fig. 8.

This third embodiment adds priority control to the second embodiment. In the signal format of Fig. 8, the WiMAX standard downlink circuit is unchanged. That is, following the preamble signal a, a broadcast signal b provides notification of the data storage region based on a common connection ID. Then, burst data c, multiplexed in subchannels, is transmitted.

As shown in Fig. 9 and Fig. 10, a characteristic of this third embodiment is the assumption of communication by for example terminal MS #0 and terminal MS #1. When the priority order is made higher for terminal MS #0, the next time slot for which transmission rights are granted is provided to terminal MS #0, and transmission rights are provided two time slots later to terminal MS #1. As a result, collision does not occur. That is, the order of priority is assigned from terminals with a high degree of urgency, and transmission collisions are avoided.

In Fig. 9, when terminal MS #1 receives signals from terminal MS #0 in steps S3-1 to 3-4, terminal MS #1 can perform transmission two time slots later (steps S5-1 to 5-3). Similarly, transmission rights are again provided to terminal MS #1 in time slot #8.

On the other hand, when terminal MS #0 receives signals from terminal MS #1 in steps S6-1 to 6-4, terminal MS #0 can perform transmission in the next time slot (#5).

In the flow of Fig. 9 and Fig. 10 processing is not performed in time for the time slot immediately following reception of signals from the other terminal, and so the time slot immediately following is skipped, and "the next time slot" means the time slot after this. For the terminal MS #1 with lower order of priority, this similarly means two time slots later.

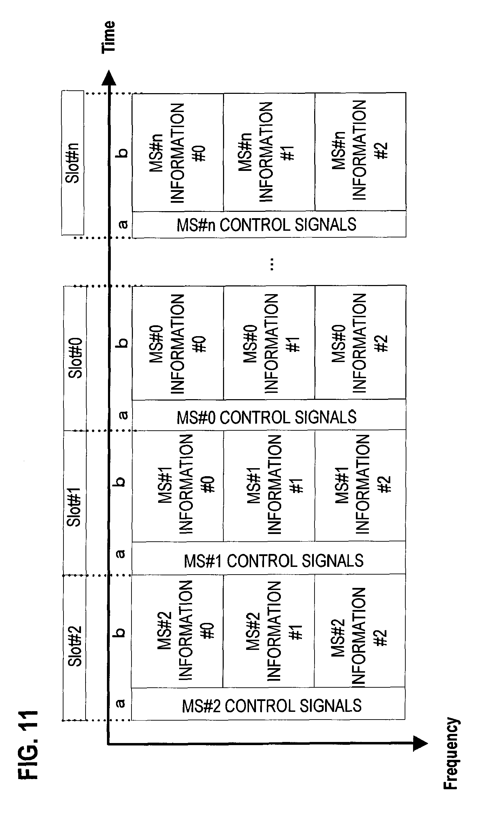

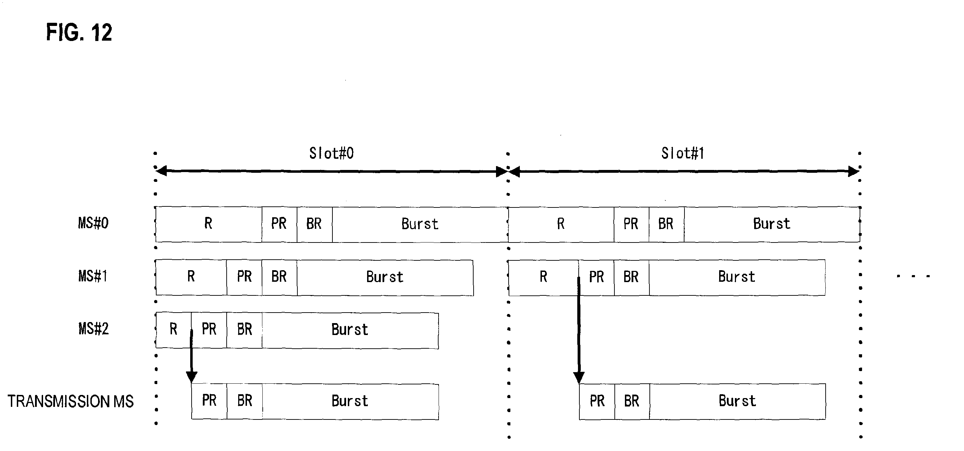

Fig. 11 shows an example of the signal format for a fourth embodiment, in which, as opposed to the second embodiment, priority control is performed enabling transmission within time slots. Fig. 12 is a time chart used to explain transmission collision avoidance in the fourth embodiment.

In Fig. 11, the format of control signals a (including preamble signals and broadcast signals) and, following these, allocation of a plurality of information data signals b to subchannels, conforms to the WiMAX standard, similarly to the previous embodiment.

Fig. 12 explains collision avoidance in the fourth embodiment. In Fig. 12, R indicates the wait time, PT is the preamble signal, and BR is the broadcast signal. Other than R, similarly to the previously described embodiment, the WiMAX standard downlink circuit is unchanged.

That is, different unique wait times R are set for the respective terminals in order to provide transmission rights to one terminal MS in one time slot.

In the example of Fig. 12, the wait times R are set so as to become larger in the order of the terminals MS #2, MA #1, MS #0.

Hence as shown in Fig. 11, in time slot #0 terminal MS #2 has transmission rights, in time slot #1 terminal MS #1 has transmission rights, and in time slot #2 terminal MS #0 has transmission rights.

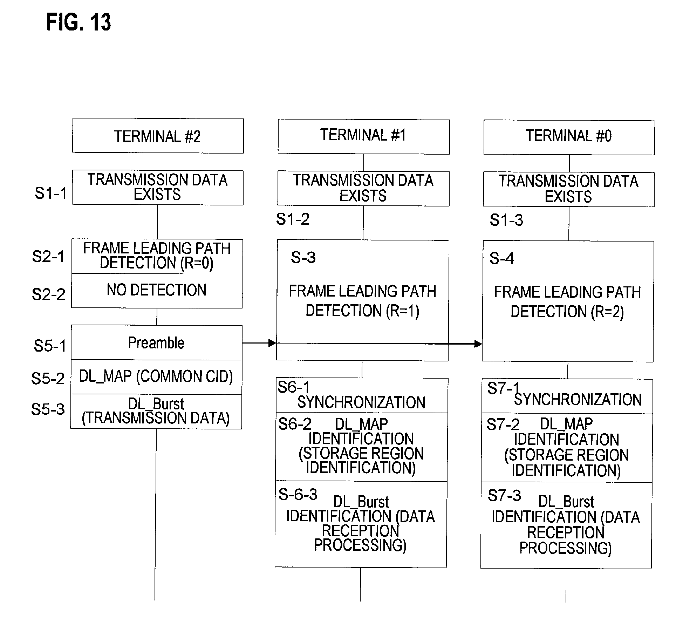

Fig. 13 shows the operation flow based on these transmission rights. The three terminals MS #0, #1, #2 all have transmission data (steps S1-1, S1-2, S1-3).

As explained in Fig. 12, the wait time for terminal MS #2 is set to R = 0. A wait time of R = 0 means that the wait time is zero, and so terminal MS #2 performs path detection (step S2-1), and because a path is not detected (step S2-2), immediately performs transmission (steps S5-1 to S5-3).

On the other hand, during this period the other terminals MS #1 and #0 are performing frame leading path detection operations (steps S3, S4).

Hence preamble signals transmitted from terminal MS #2 are received (steps S3, S4), and so these perform synchronization and receive signals from terminal MS #2 (steps S6-1 to S6-2, 7-1 to S7-2).

Hence by keeping the wait time R within the OFDM guard interval time GI, transmission rights allocation can be set for a plurality of terminals MS.

In this way, in the fourth embodiment, transmission collision avoidance is improved, and by reviewing periods in which transmission is possible, the efficiency of frequency utilization is improved.

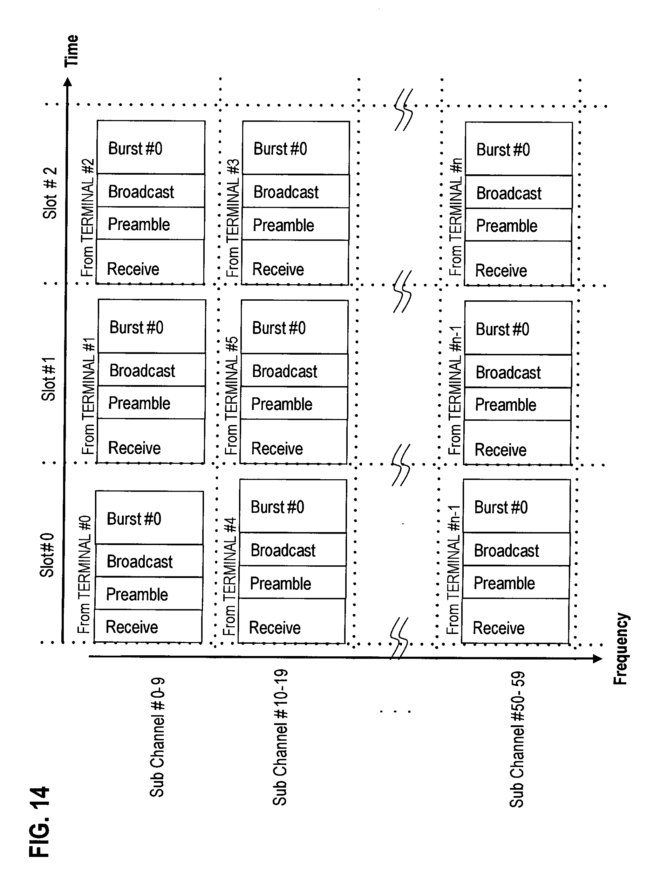

Fig. 14 shows an example of a signal format explained in a fifth embodiment.

In this embodiment, compared with the fourth embodiment, a plurality of subchannels are grouped, and within these, processing similar to that of the fourth embodiment is performed.

That is, in Fig. 14, as an embodiment, every ten subchannels #0-9, #10-19, ..., are grouped as respective groups.

Then, for each group, wait times R are made different and set individually for terminals MS belonging to the group, similarly to the fourth embodiment.

Thus in the example of Fig. 14, for the three terminals MS #0 to #2 belonging to the group of subchannels #0 to #9, transmission rights are provided to terminal MS #0 in time slot #0, to terminal MS #1 in time slot #1, and to terminal MS #2 in time slot #2. For the three terminals MS #3 to #5 belonging to the group of subchannels #10 to #19, transmission rights are provided to terminal MS #4 in time slot #0, to terminal MS #5 in time slot #1, and to terminal MS #3 in time slot #2.

In this fifth embodiment, the characteristics of the OFDMA method are exploited, and transmission regions are divided by subchannel, so that transmission collision avoidance is achieved and terminal transmission efficiency can be improved.

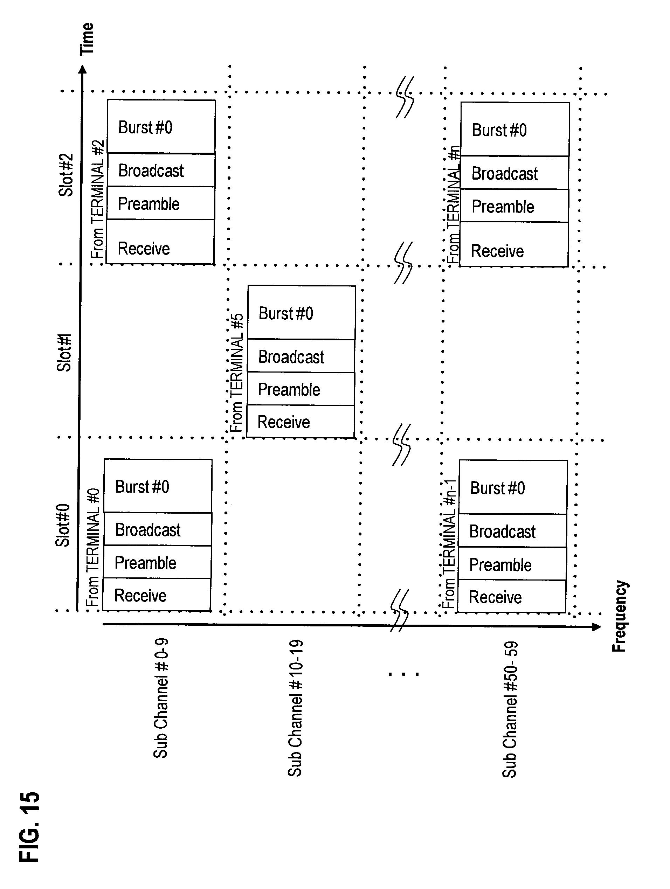

Fig. 15 shows an example of a signal format used in explaining a sixth embodiment.

In this embodiment, pairs of groups are defined, the terminals in respective groups of the pair taking turns to transmit in successive slots. In other words, an approach is taken in which two subgroups are transmission regions. In Fig. 15, a terminal MS uses its own terminal number or similar to determine as its groups two adjacent groups.

In Fig. 15, in for example two groups, of subchannels #0 to #9 and subchannels #10 to #19, the usage region is changed at each time slot. In subchannels #0 to #9, transmission rights are set in every slot, that is, at #0 and #2 for terminals MS #0 and #2. Similarly in subchannels #10 to #19, transmission rights are set in slot #1 for terminal MS #5.

By this means, transmission rights are provided to terminals MS for one slot in the time direction and at intervals of ten subchannels in the subchannel direction. In this way, in the sixth embodiment, by changing the usage region at every time slot, a guard band is inserted, and a transmission terminal can receive information for other groups in the same slot.

## Claims

1. A communication system, which performs ad-hoc communication between terminals, comprising:
in each terminal (MS), a signal generation portion(2,3), which provides a plurality of subchannels in the frequency axis direction in a plurality of frequency bands orthogonally frequency-divided, and generates a format signal with transmission data allocated to the subchannels; and
a path detection portion(36), which detects a preamble signal at the beginning of the format signal, and detects the presence or absence of a carrier, **characterized in that**
when the carrier of another terminal is not detected by the path detection portion(36), transmission of the generated format signal is performed; and
when the preamble signal is detected by another terminal, synchronization is established, and the transmission data of the transmitted format signal is received.

2. The communication system according to Claim 1, further comprising a GPS reception portion(5) which generates an internal clock signal based on a clock signal from a GPS system(1B), and **characterized in that** transmission of the format signal is performed in a time slot unit synchronized with the internal clock signal.

3. The communication system according to Claim 2, **characterized in that** the timing for transmission of the format signal is set to an integral multiple of the time slot unit, and **in that** the timing for the transmission is set in multiples of the time slot unit, in an order of priority for each terminal.

4. The communication system according to Claim 2, **characterized in that** the priority of timing for detection of the preamble signal is set, for each terminal, within the time slot unit.

5. The communication system according to Claim 4, **characterized in that** a plurality of terminals are allocated to a group unit, with a plurality of subchannels in the frequency axis direction as a group, and the priority of timing for detection of the preamble signal is set, for the plurality of allocated terminals of each group, within the time slot unit for each subchannel.

6. The communication system according to Claim 5, **characterized in that** two subchannels, adjacent in the frequency axis direction, form a group, and the subchannel used by an allocated terminal is switched at each time slot.

7. A terminal (MS) for use in a communication system which performs ad-hoc communication between terminals, comprising:
a signal generation portion(2,3), which provides a plurality of subchannels in the frequency axis direction in a plurality of frequency bands orthogonally frequency-divided, and generates a format signal with transmission data allocated to the subchannels; and
a path detection portion(36), which detects a preamble signal at the beginning of the format signal, and detects the presence or absence of a carrier, **characterized in that**
when the carrier of another terminal is not detected by the path detection portion(36), transmission of the generated format signal is performed; and
when the preamble signal is detected by another terminal, synchronization is established, and the transmission data of the transmitted format signal is received.

8. A computer program which when executed by a processor of a mobile terminal causes the mobile terminal to provide the terminal of claim 7.

9. An ad-hoc communications method between terminals comprising the steps of:
in each terminal (MS), providing a plurality of subchannels in the frequency axis direction in a plurality of frequency bands orthogonally frequency-divided, and generating a format signal with transmission data allocated to the subchannels; and
detecting a preamble signal at the beginning of the format signal, and the presence or absence of a carrier, wherein
when the carrier of another terminal is not detected by the detecting step, transmission of the generated format signal is performed; and
when the preamble signal is detected by another terminal, synchronization is established, and the transmission data of the transmitted format signal is received.
